# EUROPÄISCHE PATENTSCHRIFT

(11) **EP 3 052 329 B1**
(45) Veröffentlichungstag und Bekanntmachung des Hinweises auf die Patenterteilung: **31.07.2019**
(21) Anmeldenummer: 14771912.4
(22) Anmeldetag: 24.09.2014
(51) Int. Cl.: B60G 17/08, B60G 99/00, B62D 33/06, F16F 9/18, B60N 2/50, F16F 9/46, B60N 2/52

(54) **FAHRZEUGSITZ ODER FAHRZEUGKABINE MIT EINER FEDERUNGSEINRICHTUNG UND NUTZKRAFTFAHRZEUG**
VEHICLE SEAT OR VEHICLE CAB WITH A SUSPENSION SYSTEM, AND UTILITY VEHICLE
SIÈGE DE VÉHICULE OU CABINE DE VÉHICULE DOTÉ(E) D'UN DISPOSITIF DE SUSPENSION ET VÉHICULE UTILITAIRE

(30) Priorität: 01.10.2013 DE 102013110926
(43) Veröffentlichungstag der Anmeldung: 10.08.2016
(73) Patentinhaber: GRAMMER AG, 92224 Amberg (DE)
(72) Erfinder: HALLER, Erwin, 92262 Birgland (DE)
(74) Vertreter: Hannke, Christian
(86) Internationale Anmeldenummer: PCT/EP2014/070305
(87) Internationale Veröffentlichungsnummer: WO 2015/049131

(56) Entgegenhaltungen:
- EP-A1- 1 188 608
- DE-A1-102004 039 973
- DE-A1-102011 100 307
- US-A- 5 390 121
- US-A- 6 120 082
- US-A1- 2004 112 659

## Beschreibung

Die Erfindung betrifft einen Fahrzeugsitz oder eine Fahrzeugkabine mit einer Federungseinrichtung umfassend ein oberes Abschlussteil und ein gegenüber dem oberen Abschlussteil auslenkbares unteres Abschlussteil, welche mittels eines Federungselements federnd miteinander verbunden sind, und mit einer Dämpfungseinrichtung zum Dämpfen von zwischen den Abschlussteilen wirkenden Schwingungen.

Des Weiteren betrifft die Erfindung ein Nutzkraftfahrzeug mit einem Fahrzeugsitz und mit einer Fahrzeugkabine.

Gattungsgemäße Fahrzeugsitze oder Fahrzeugkabinen, mittels welchen sich der Fahrkomfort insbesondere an Nutzkraftfahrzeugen erheblich verbessern lässt, sind aus dem Stand der Technik gut bekannt. So zeigt die US 6120082 A ein aktives Sitzfederungssystem mit einer Federungseinrichtung umfassend ein oberes Abschlussteil und ein gegenüber dem oberen Abschlussteil auslenkbares unteres Abschlussteil, welche mittels eines Federungselements federnd miteinander verbunden sind, und mit einer Dämpfungseinrichtung zum Dämpfen von an wenigstens einem der beiden Abschlussteilen wirkenden Schwingungen.

Es ist Aufgabe vorliegender Erfindung, gattungsgemäße Fahrzeugsitze bzw. Fahrzeugkabinen bei verbessertem Sitz- bzw. Fahrkomfort konstruktiv einfacher gegenüber einer Fahrzeugkarosserie zu lagern.

Die Aufgabe der Erfindung wird von einem Fahrzeugsitz oder einer Fahrzeugkabine mit den im Anspruch 1 angegebenen Merkmalen gelöst.

Die Erfindung baut auf dem gattungsgemäßen Stand der Technik dadurch auf, dass die Dämpfungseinrichtung und eine Abstandsnivellierungseinrichtung zum Einstellen eines Abstandes zwischen dem oberen Abschlussteil und dem unteren Abschlussteil ein gemeinsames Druck- und Zugstufen-gesteuertes Stellgliedfluidelement aufweisen, wodurch ein entsprechend einfach bauendes Federungssystem bereitgestellt werden kann.

Vorteilhafterweise sind die Dämpfungseinrichtung und die Abstandsnivellierungseinrichtung zumindest teilweise mittels des gemeinsamen Druck- und Zugstufen-gesteuerten Stellgliedfluidelements konstruktiv einfach realisiert, so dass deren bauliche Umsetzung im Zusammenhang mit einem fluidfördernden Fluidfördersystem extrem bauteilreduziert vorgenommen werden kann.

Die vorliegende Abstandsnivellierungseinrichtung verkörpert im Sinne der Erfindung eine in vertikaler Richtung arbeitende Höhennivellierungseinrichtung, so dass das obere Abschlussteil gegenüber dem unteren Abschlussteil mittels des gemeinsamen Druck- und Zugstufen-gesteuerten Stellgliedfluidelements in vertikale Auslenkrichtung verlagert werden kann.

Das Druck- und Zugstufen-gesteuerte Stellgliedfluidelement ist erfindungsgemäß derart zwischen den beiden Abschlussteilen angeordnet, dass es auf das obere der beiden Abschlussteile in Fahrzeughöhenrichtung sowohl schwingungsisolierend als auch höhenregulierend wirken kann.

Hierdurch kann eine hydraulisch wirkende Dämpfungs- und Höhennivelliereinheit für ein Federungssystem hinsichtlich einer Dämpfungseinrichtung mitsamt einer Höhennivellierung und damit der gesamte Unterbau des Fahrzeugsitzes bzw. der Fahrzeugkabine konstruktiv außerordentlich einfach umgesetzt werden, um eine entsprechende Schwingungsisolierung und/oder Höheneinstellung ausschließlich oder unterstützend zu bewirken.

Somit können in Fahrzeughöhenrichtung wirkende Verstellkräfte konstruktiv einfach erzeugt werden, wie nachstehend noch beispielhaft ausführlicher erläutert ist.

Zudem kann durch diese hydraulisch wirkende Dämpfungs- und Höhennivelliereinheit bzw. dem gemeinsamen Druck- und Zugstufen-gesteuerten Stellgliedfluidelement über den gesamten zur Verfügung stehenden Federungsweg eine linear ansteigende Kraftkennlinie bzw. Federkennlinie erzeugt werden.

An dieser Stelle sei angemerkt, dass das gemeinsame Druck- und Zugstufen gesteuerte Stellgliedfluidelement bzw. die hydraulisch wirkende Dämpfungs- und Höhennivelliereinheit konstruktiv sehr einfach gebaut werden kann, wenn das Stellgliedfluidelement ein hydraulisches Stoßdämpferelement umfasst.

Die Aufgabe der Erfindung wird darüber hinaus von einem Nutzkraftfahrzeug mit den im Anspruch 11 angegebenen Merkmalen gelöst.

Speziell im Zusammenhang mit Nutzkraftfahrzeugen sind der erfindungsgemäße Fahrzeugsitz bzw. die erfindungsgemäße Fahrzeugkabine vorteilhaft anwendbar, da der Fahrzeugführer aufgrund des wesentlich verbesserten Sitz- bzw. Fahrkomforts vor vorzeitiger Ermüdung besser geschützt ist. Darüber hinaus besteht auch bezüglich der Nutzkraftfahrzeuge ein großes Interesse an konstruktiv einfachen und damit weniger störungsanfälligen Lösungen für entsprechende Federungssysteme. Dies gilt insbesondere auch hinsichtlich landwirtschaftlich genutzten Nutzkraftfahrzeugen.

Das bezüglich des Fahrzeugsitzes bzw. der Fahrzeugkabine vorgesehene Federungssystem umfasst somit die Federungseinrichtung und die Dämpfungseinrichtung, und es impliziert vorliegend ebenfalls eine Höhennivellierungseinrichtung.

Die Federungseinrichtung kann ein oder mehrere Federungselemente umfassen, welche beispielsweise als mechanisches Federungselement und/oder vorzugsweise als pneumatisches Federungselement ausgestaltet sein können.

Das obere Abschlussteil der Federungseinrichtung kann beispielsweise an der Unterseite eines Sitzteils des Fahrzeugsitzes oder an der Unterseite der Fahrzeugkabine befestigt sein, oder von dieser jeweiligen Unterseite unmittelbar ausgebildet sein.

Insofern kann das untere Abschlussteil der Federungseinrichtung beispielsweise an einem Bauteil einer Fahrzeugkarosserie festgelegt oder direkt durch diese realisiert sein.

Jedenfalls ist das obere Abschlussteil gegenüber dem unteren Abschlussteil an einem Unterbau des Fahrzeugsitzes bzw. der Fahrzeugkabine derart gelagert, dass ersteres in Vertikalauslenkrichtung, also in Fahrzeughöhenrichtung eines Fahrzeuges, insbesondere eines Nutzkraftfahrzeuges, gegenüber dem unteren Abschlussteil ausgelenkt werden kann, insbesondere wenn eine äußere Schwingungsanregung auf den Fahrzeugsitz bzw. auf die Fahrzeugkabine einwirkt.

Insofern handelt es sich bei dem oberen Abschlussteil um ein im Wesentlichen vertikal schwingendes Bauteil der Federungseinrichtung, dessen Hauptschwingungsrichtung in Richtung der Fahrzeughöhenrichtung, also vertikal, ausgerichtet ist.

Hierzu ist die Federungseinrichtung insbesondere mit einem Vertikalfederungselement ausgestattet, welches in Fahrzeughöhenrichtung federnd wirken kann.

Eine Auslenkungsmechanik zum Auslenken des oberen Abschlussteils gegenüber dem unteren Abschlussteil kann baulich sehr einfach beispielsweise durch ein Scherengestell erreicht werden. Sie muss aber ein solches Scherengestell nicht zwingend umfassen.

Konstruktiv ist es jedoch von Vorteil, wenn das obere Abschlussteil und das untere Abschlussteil mittels eines Scherengestells miteinander wirkverbunden sind. Hierdurch ist das obere Abschlussteil zudem in Vertikalrichtung definiert geführt.

Eine bevorzugte Ausführungsvariante sieht vor, dass das Stellgliedfluidelement mit einer regelbaren Fluidfördereinrichtung wirkverbunden ist, welche einerseits mit der Druckstufenkammer und andererseits mit der Zugstufenkammer des Stellgliedfluidelements derart fluidisch verschaltet ist, dass mittels einer Leistungsregulierung der regelbaren Fluidfördereinrichtung unterschiedliche Höhennivellierungen hinsichtlich des oberen Abschlussteils vorgenommen werden können.

Durch diese fluidische Verschaltung kann das obere Abschlussteil gegenüber dem unteren Abschlussteil durch die Fluidfördereinrichtung bzw. durch einen hierdurch erzeugten Fluidförderstrom aktiv angehoben oder abgesenkt werden, insbesondere je nachdem in welche Förderrichtung die Fluidfördereinrichtung das Fluid fördert. Hierdurch kann das Fluidfördersystem vorteilhaft weiterentwickelt werden.

Erfindungsgemäß ist vorgesehen, dass die Fluidfördereinrichtung in ihrer Förderrichtung umkehrbar ist.

Alternativ könnten auch zwei Fluidfördereinrichtungen mit entgegengesetzten Förderrichtungen in ein entsprechend ausgestaltetes Fluidfördersystem eingebunden sein.

Erfindungsgemäß ist vorgesehen, dass das Stellgliedfluidelement mit einer regelbaren Fluidfördereinrichtung wirkverbunden ist, welche einerseits mit der Druckstufenkammer und andererseits mit der Zugstufenkammer des Stellgliedfluidelements derart fluidisch verbunden ist, dass das Fluid in Abhängigkeit von der Förderrichtung der Fluidfördereinrichtung entweder aus der Druckstufenkammer oder aus der Zugstufenkammer des Stellgliedfluidelements, und/oder einem anderen Fluidreservoir des Fluidfördersystems entweder in die Druckstufenkammer oder in die Zugstufenkammer förderbar ist. Hierdurch kann das obere Abschlussteil gegenüber dem unteren Abschlussteil sehr präzise in zwei entgegengesetzten Richtungen aktiv verlagert, insbesondere angehoben oder abgesenkt, werden. Eine besonders bevorzugte Ausführungsvariante sieht vor, dass das Stellgliedfluidelement mit einem Stromregelventilelement wirkverbunden ist, welches mit dem Stellgliedfluidelement und einer regelbaren Fluidfördereinrichtung derart fluidisch verschaltet ist, dass die Leistung der Druckstufe oder der Zugstufe mittels dieses Stromregelventilelements zusätzlich modulierbar ist. Auch hierdurch kann das Fluidfördersystem konstruktiv nochmals vereinfacht werden.

Das Stromregelventilelement stellt hierbei eine Einrichtung zum Modulieren einer Dämpferleistung sowohl an der Druckstufe als auch an der Zugstufe des Stellgliedfluidelements dar.

Vorzugsweise ist das Stromregelventilelement als elektrisch betätigbares Drosselventil in Gestalt eines Proportionalstromregelventils realisiert, da das Stromregelventilelement hierdurch sehr schnell ansteuerbar ist, wodurch wiederum sehr schnell entsprechende Druckveränderungen in der Druckstufen- bzw. Zugstufenkammer des Stromregelventilelements erreicht werden können. Es versteht sich, dass alternativ auch anders betätigbare Stromregelventilelemente zum Einsatz kommen können.

Ist das Stromregelventilelement mit dem Stellgliedfluidelement und der regelbaren Fluidfördereinrichtung derart fluidisch verschaltet, dass die Leistungen der Druckstufe und der Zugstufe unter Umgehung einer Leistungsbeeinflussung der Fluidfördereinrichtung mittels dieses Stromregelventilelements zusätzlich modulierbar sind, kann ein noch besseres Ansprechverhalten des Stellgliedfluidelements erreicht werden.

Eine sehr effektive Schwingungsisolierung kann vorliegend erzielt werden, wenn das Stromregelventilelement mit dem Stellgliedfluidelement und der regelbaren Fluidfördereinrichtung derart fluidisch verschaltet ist, dass mittels des Stromregelventilelements eine Schwingungsisolierung bezüglich eines der Abschlussteile vorgenommen werden kann.

Ist ein Niederdruckanschluss der Fluidfördereinrichtung mittels einer Niederdruckleitung fluidisch an der Zugstufenkammer und ein Hochdruckanschluss der Fluidfördereinrichtung mittels einer Hochdruckleitung fluidisch an der Zugstufenkammer, oder umgekehrt, angeschlossen, wobei die Niederdruckleitung und die Hochdruckleitung mittels eines elektrisch betätigbaren Proportionalstromregelventils fluidisch miteinander verbunden sind, kann neben einer aktiven Höhennivellierung auch eine Schwingungsisolierung konstruktiv und verfahrenstechnisch besonders einfach vorgenommen werden.

Hierbei wechselt die Nieder- und Hochdruckseite je nach Förderrichtung der Fluidfördereinrichtung.

Die Art und Intensität der Regelung des gemeinsamen Druck- und Zugstufen-gesteuerten Stellgliedfluidelements kann hierbei mittels eines Regelalgorithmus einer entsprechenden Steuer- und/oder Regeleinrichtung beeinflusst werden.

Insofern ist es vorteilhaft, wenn eine Steuer- und/oder Regeleinrichtung zum Einstellen einer Fluidfördereinrichtung und/oder eines Stromregelventilelements in Abhängigkeit von einer auf das obere Abschlussteil wirkenden Auflast vorhanden ist.

Speziell ein Einstellen der Fluidfördereinrichtung und/oder des Stromregelventilelements in Abhängigkeit von der Art und Intensität der auf das Stellgliedfluidelement wirkenden äußeren Kräfte ermöglicht eine wesentliche Erhöhung des Sitzkomforts.

Das gemeinsame Druck- und Zugstufen-gesteuerte Stellgliedfluidelement kann besonders effizient wirken, wenn die Steuer- und/oder Regeleinrichtung einen auf der Seite des unteren Abschlussteils angeordneten Beschleunigungsmesssensors zum Ermitteln von auf das untere Abschlussteil wirkenden Beschleunigungen umfasst.

Eine noch exaktere Steuerung bzw. Regelung des gemeinsamen Druck- und Zugstufen-gesteuerten Stellgliedfluidelements kann erzielt werden, wenn die Steuer- und/oder Regeleinrichtung einen Wegmesssensor zum Erfassen eines Abstands und/oder einer Abstandsabweichung zwischen dem oberen und dem unteren Abschlussteil umfasst.

Mittels der vorliegenden Erfindung ist mit sehr einfachen Mitteln ein aktiv geregeltes Federungssystem geschaffen, welches zusätzlich über das gemeinsame Druck- und Zugstufen-gesteuerte Stellgliedfluidelement verfügt, mittels welchem zum einen eine temporäre Nivellierung eines eingestellten Höhenniveaus, insbesondere einer eingestellten Fahrzeugsitzhöhe, erzielt werden kann. Zum anderen kann es aktiv in die Schwingungsisolierung eingreifen. Insofern ist hierdurch baulich besonders einfach auch die hydraulische Dämpfungs- und Höhennivelliereinheit geschaffen.

Hierbei kann ein herkömmliches Luftfederungselement oder dergleichen als Basisfederung dienen, während das gemeinsame Druck- und Zugstufen-gesteuerte Stellgliedfluidelement als zusätzliches Aktiv-Bauteil oder als zusätzliche Aktiv-Bauteilgruppe unterstützend in Vertikalfederungsrichtung wirken kann.

Die regelbare Fluidfördereinrichtung ist vorzugsweise in Gestalt einer mit einem Elektromotor angetriebenen Hochdruckpumpe mit variabler Drehzahl und idealerweise mit einer Drehrichtungsumkehr ausgeführt. Sie besitzt beispielsweise eine definierte Ölfördermenge in cm³/U, welche bei entsprechender Drehzahl eine hierdurch erzeugte Literleistung in die Druckstufenkammer bzw. Druckstufenseite oder in die Zugstufenkammer bzw. Zugstufenseite des Stellgliedfluidelements einbringt, wodurch entsprechend dem der Druckstufenseite bzw. Zugstufenseite innewohnenden Strömungswiderstand eine auf das obere Abschlussteil wirkende Ausschubkraft (Druckstufenseite) oder Einschubkraft (Zugstufenseite) erzeugt wird.

Bei Stillstand, also 0,0 I Förderleistung der regelbaren Fluidfördereinrichtung, wirkt das Stellgliedfluidelement als passiver Stoßdämpfer, der in seiner Grundauslegung Kenndaten für die Zug- und Druckstufenleistung besitzt, wie diese auch in passiven, handelsüblichen Fahrzeugsitzen eingesetzt sind.

Bei einer Aktivierung der regelbaren Fördereinrichtung wird, entsprechend ihrer Drehzahl und ihrer Förderrichtung, eine definierte Fördermenge von der Zugstufenseite auf die Druckstufenseite, oder umgekehrt, umgepumpt. Der je nach Fördermenge entstehende Strömungswiderstand an den Ventilbohrungen der Druckstufe bewirkt eine Ausschubkraft bzw. vertikal wirkende Stützkraft an der Kolbenstangenseite des Stellgliedfluidelements. Dies bedeutet, dass das durch eine Auflast belastete obere Abschlussteil der Federungseinrichtung um einen hieraus resultierenden Wert angehoben wird. Der je nach Fördermenge entstehende Strömungswiderstand bezüglich der Zugstufe bewirkt eine Einschubkraft an der gegenüberliegenden Kolbenstangenseite, wodurch eine schnelle Absenkung bzw. Annäherung des oberen Abschlussteils gegenüber dem unteren Abschlussteil bzw. an das untere Abschlussteil erzielt werden kann.

Diese Aktivkraft bzw. Aus- oder Einschubkraft wird zum einen als Höhennivellierung und zum anderen als Regelgröße für die Beeinflussung der Schwingungsisolation genutzt, und auch, um die Dämpferleistung des Stellgliedfluidelements zu erhöhen oder zu senken.

Als weiteres Merkmal ist vorliegend das Stromregelventilelement vorgesehen, welches zusätzlich die Isolation von Schwingungseinleitungen beeinflusst. Hierbei wird die Dämpferleistung des Stellgliedfluidelements, die im passiven Zustand als hart definiert ist, auf weicher gestellt. Das heißt, der Strömungswiderstand zwischen der Druck- und Zugstufe des Stellgliedfluidelements wird mithilfe des Stromregelventilelements reduziert.

Weitere Vorteile, Ziele und Eigenschaften vorliegender Erfindung werden anhand der Zeichnung und nachfolgender Beschreibung erläutert, in welchen beispielhaft ein Fahrzeugsitzunterbau eines Nutzkraftfahrzeugsitzes mit einem gemeinsamen Zug- und Druckstufen gesteuerten Stellgliedfluidelement einer Dämpfungseinrichtung und einer Abstandsnivellierungseinrichtung dargestellt und beschrieben ist. In der Zeichnung zeigen:
- Figur 1: schematisch eine perspektivische Ansicht eines Fahrzeugsitzunterbaus umfassend ein gemeinsames Zug- und Druckstufen-gesteuertes Stellgliedfluidelement einer Dämpfungseinrichtung und einer Abstandsnivellierungseinrichtung, wobei das Stellgliedfluidelement derart zwischen zwei Abschlussteilen einer Federungseinrichtung angeordnet ist, dass es auf eine der beiden Abschlussteile in Fahrzeughöhenrichtung sowohl schwingungsisolierend als auch höhennivellierend wirkt;
- Figur 2: schematisch eine Ansicht eines ersten Fluidschaltbildes eines ersten möglichen Fluidfördersystems des Stellgliedfluidelements aus der Figur 1;
- Figur 3: schematisch eine Ansicht eines weiteren Fluidschaltbildes eines weiteren möglichen Fluidfördersystems des Stellgliedfluidelements aus der Figur 1; und
- Figur 4: schematisch eine Ansicht eines Diagramms mit unterschiedlichen Federkennlinien der Federungseinrichtung aus der Figur 1.

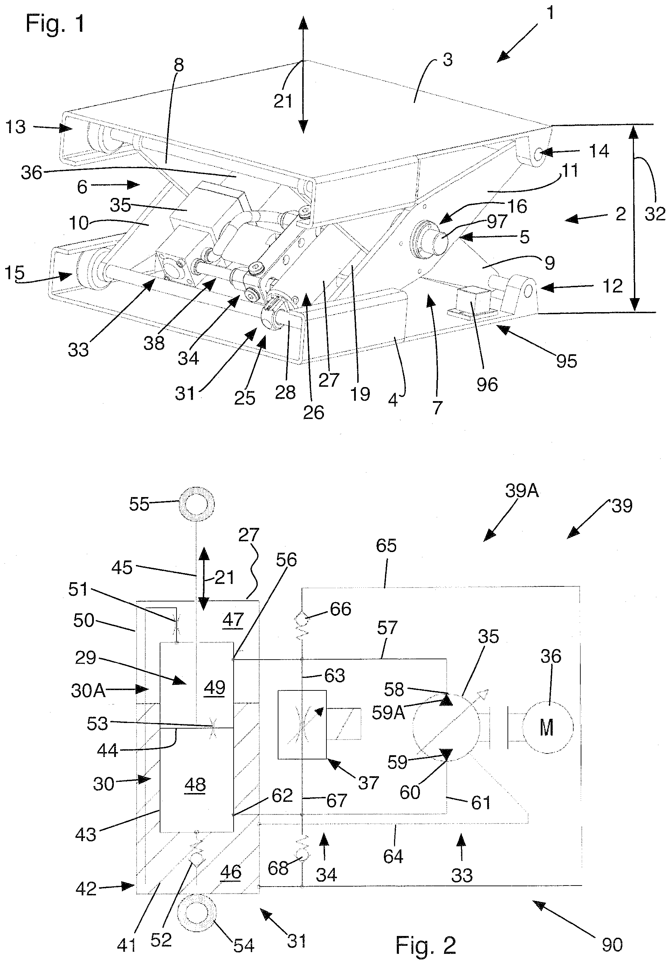

Der in der Figur 1 gezeigte Fahrzeugsitzunterbau 1 eines Fahrzeugsitzes (hier nicht weiter gezeigt) weist eine Federungseinrichtung 2 auf, welche sich durch ein oberes Abschlussteil 3 und ein unteres Abschlussteil 4 auszeichnet, die in diesem Ausführungsbeispiel beide durch ein Scherengestell 5 miteinander höhenverstellbar gekoppelt sind.

Das Scherengestell 5 besteht im Wesentlichen aus zwei Scherenarmpaaren 6 und 7, die wiederum jeweils einen ersten Scherenarm 8 bzw. 9 und einen zweiten Scherenarm 10 und 11 umfassen.

Die ersten Scherenarme 8 bzw. 9 sind einerseits an dem unteren Abschlussteil 4 mittels einer gemeinsamen unteren Festlagereinrichtung 12 drehbeweglich gelagert. Andererseits sind sie an dem oberen Abschlussteil 3 mittels einer gemeinsamen oberen Loslagereinrichtung 13 linearbeweglich gelagert.

Ähnlich verhält es sich bezüglich der zweiten Scherenarme 10 und 11, welche mittels einer gemeinsamen oberen Festlagereinrichtung 14 drehbeweglich an dem oberen Abschlussteil 3 und mittels einer gemeinsamen unteren Loslagereinrichtung 15 linearbeweglich an dem unteren Abschlussteil 4 gelagert sind.

Die ersten und zweiten Scherenarme 8 und 10 bzw. 9 und 11 des jeweiligen Scherenarmpaars 6 bzw. 7 sind mittels Drehgelenken 16 (hier nur explizit beziffert) drehbeweglich miteinander verbunden.

Darüber hinaus umfasst die Federungseinrichtung 2 noch ein Federungselement 19, mittels welchem die beiden Abschlussteile 3 und 4 federnd miteinander verbunden sind. Das Federungselement 19 ist in diesem Ausführungsbeispiel durch ein Luftfederelement bereitgestellt.

Im Einbauzustand sind das obere Abschlussteil 3 sitzteilseitig und das untere Abschlussteil 4 karosserieseitig in dem Fahrzeugsitz derart integriert, dass das obere Abschlussteil 3 gegenüber dem unteren Abschlussteil 4 in Fahrzeughöhenrichtung 21, also vertikal, aus- bzw. einfedern kann, wenn eine entsprechende äußere Anregung auf den Fahrzeugsitz bzw. auf das Fahrzeug wirkt.

Um die Schwingungen des oberen Abschlussteils 3 zumindest teilweise isolieren zu können, umfasst der Fahrzeugsitzunterbau 1 noch eine Dämpfungseinrichtung 25 mit einem hydraulischen Stoßdämpferelement 26.

Das hydraulische Stoßdämpferelement 26 ist mit seinem Zylinderteil 27 an einer Querstange 28 der gemeinsamen unteren Loslagereinrichtung 15 und mit einem Kolbenteil 29 (siehe Figur 2) an dem ersten Scherenarm 9 des zweiten Scherenarmpaars 7 befestigt.

Das hydraulische Stoßdämpferelement 26 bildet in diesem Ausführungsbeispiel die Basis für das erfindungsgemäße Druckstufen 30 und Zugstufen 30A-gesteuerte Stellgliedfluidelement 31, mittels welchem zusätzlich noch eine aktive Schwingungsisolierung und darüber hinaus auch noch eine Höhennivellierung des oberen Abschlussteils 3 gegenüber dem unteren Abschlussteil 4 erzielt wird.

Hierzu ist das Druckstufen 30 und Zugstufen 30A-gesteuerte Stellgliedfluidelement 31 derart zwischen den beiden Abschlussteilen 3, 4 angeordnet, dass es auf das obere Abschlussteil 3 in Fahrzeughöhenrichtung 21 sowohl zusätzlich noch aktiv schwingungsisolierend als auch darüber hinaus noch höhennivellierend wirken kann.

Insofern weist der Fahrzeugsitzunterbau 1 nicht nur eine einfache Dämpfungseinrichtung 25 sondern des Weiteren noch eine Abstandsnivellierungseinrichtung (hier nicht nochmals gesondert beziffert) zum Einstellen des Abstandes 32 zwischen dem oberen Abschlussteil 3 und dem unteren Abschlussteil 4 auf, wobei die Dämpfungseinrichtung 25 und die Abstandsnivellierungseinrichtung das Druckstufen 30 und Zugstufen 30A-gesteuerte Stellgliedfluidelement 31 gemeinsam aufweisen. Hierdurch baut der Fahrzeugsitzunterbau 1 trotz einer erheblichen Funktionserweiterung äußerst kompakt.

Darüber hinaus sind in dem Fahrzeugsitzunterbau 1 zum einen noch eine regelbare Fluidfördereinrichtung 33, um ein Fluid, wie im vorliegenden Ausführungsbeispiel ein Hydrauliköl 46, zu fördern, und zum anderen noch ein Stromregelventilelement 34 vorgesehen.

Die Fluidfördereinrichtung 33 besteht aus einer Hydraulikpumpe 35, welche stufenlos durch einen Elektromotor 36 angetrieben ist, wobei die Fluidfördereinrichtung 33 zwei entgegengesetzte Förderrichtungen 59 und 59A (siehe Figuren 59, 59A) aufweist, wie nachstehend noch ausführlich beschrieben ist.

Das Stromregelventilelement 34 ist hierbei als ein elektrisch betätigbares Drosselventil in Gestalt eines Proportionalstromregelventils 37 ausgeführt.

Die regelbare Fluidfördereinrichtung 33, das Stromregelventilelement 34 und das Druckstufen 30 bzw. Zugstufen 30A-gesteuerte Stellgliedfluidelement 31 sind untereinander mit einem entsprechenden Fluidleitungssystem 38 (in Figur 1 nur exemplarisch beziffert) fluidisch miteinander verbunden.

Bei der Anordnung des in der Figur 2 gezeigten ersten Fluidfördersystems 39 gemäß dem ersten Fluidschaubild 39A ist links das Druckstufen 30 und Zugstufen 30A-gesteuerte Stellgliedfluidelement 31 angeordnet. Rechts daneben befindet sich das Stromregelventilelement 34 und rechts weiter außen ist die regelbare Fluidfördereinrichtung 33 mit zwei entgegengesetzten Förderrichtungen 59 bzw. 59A angeordnet.

Das Druckstufen 30-gesteuerte Stellgliedfluidelement 31 besitzt ein einen Hydrauliköltank 41 bildendes Außengehäuse 42, welches ebenso den eigentlichen Arbeitszylinder 43 ausgestaltet, in welchem das aus dem Kolbenboden 44 und der Kolbenstange 45 bestehende Kolbenteil 29 läuft.

In dem Hydrauliköltank 41 ist ein Teil des Hydrauliköls 46 bevorratet. Darüber hinaus stellt der Hydrauliköltank 41 noch einen Gasvolumenausgleichsraum 47 bereit.

Der Arbeitszylinder 43 umfasst eine Druckstufenkammer 48, mittels welcher die Druckstufe 30 des Stellgliedfluidelements 31 realisiert ist. Die entsprechende Zugstufe 30A ist unter anderem mittels einer Zugstufenkammer 49 des Arbeitszylinders 43 realisiert.

Des Weiteren umfasst das Stellgliedfluidelement 31 noch ein Steigrohr 50 mit einem Druckausgleichsventil 51 für einen Druckausgleich innerhalb der Zugstufenkammer 49 insbesondere bei aktivierter Druckstufe 30, wobei dann über dieses Steigrohr 50 Hydrauliköl 46 aus dem Hydrauliköltank 41 in die Zugstufenkammer 49 strömen kann.

Für einen Druckausgleich in der Druckstufenkammer 48 bei aktivierter Zugstufe 30A ist ein Bodenventil 52 vorgesehen, durch welches Hydrauliköl 46 aus dem Hydrauliköltank 41 in die Druckstufenkammer 48 strömen kann, jedoch nicht umgekehrt.

Im Kolbenboden 44 ist zudem noch ein Zug-/Druckstufen-Ventil 53 des Stellgliedfluidelements 31 integriert, mittels welchem dem Stellgliedfluidelement 31 als passiv wirkendes hydraulisches Stoßdämpferelement eine Grund-Zug-/Druckstufe innewohnt.

Wie bereits vorstehend erwähnt, ist das Stellgliedfluidelement 31 mit seinem Zylinderteil 27 über eine untere Anschlussstelle 53 mit der Querstange 28 und damit auch mit dem unteren Abschlussteil 4 verbunden, während es mit seinem Kolbenteil 29 über eine obere Anschlussstelle 54 mit dem ersten Scherenarm 9 des zweiten Scherenarmpaars 7 und damit auch mit dem oberen Abschlussteil 3 verbunden ist.

Das Stellgliedfluidelement 31 weist an seiner Zugstufenkammer 49 einen Zugstufenkammeranschluss 56 auf, an welchem eine erste Fluidleitung 57 fluidisch angeschlossen ist. Diese erste Fluidleitung 57 stellt eine fluidische Verbindung zwischen der Zugstufenkammer 49 und einem ersten Anschluss 58 der Hydraulikpumpe 35 dar, so dass das Hydrauliköl 46 mittels der regelbaren Fluidfördereinrichtung 33 in Förderrichtung 59 der Hydraulikpumpe 35 aus der Zugstufenkammer 49 herausgefördert werden kann. In diesem Fall handelt es sich bei der ersten Fluidleitung 57 um eine Niederdruckleitung und bei dem ersten Anschluss 58 um einen Niederdruckanschluss.

Von einem weiteren Anschluss 60 der Hydraulikpumpe 35 führt eine weitere Fluidleitung 61 zu einem Druckstufenkammeranschluss 62, so dass das aus der Zugstufenkammer 49 heraus geförderte Hydrauliköl 46 weiter in die Druckstufenkammer 48 gefördert werden kann, wodurch das Kolbenteil 29 entsprechend aus dem Zylinderteil 27 herausgeschoben wird. Hierdurch wird das obere Abschlussteil 3 in Fahrzeughöhenrichtung 21 angehoben und somit von dem unteren Abschlussteil 4 weiter beabstandet. In diesem Fall handelt es sich bei der weiteren Fluidleitung 61 um eine Hochdruckleitung und dem weiteren Anschluss 60 um einen Hochdruckanschluss.

Genau umgekehrt verhält es sich, wenn das Hydrauliköl 46 in der der ersten Förderrichtung 59 entgegengesetzten Förderrichtung 59A gefördert wird. In diesem weiteren Fall werden die erste Fluidleitung 57 zu einer Hochdruckleitung und die weitere Fluidleitung 61 zu einer Niederdruckleitung.

Zwischen der ersten Fluidleitung 57 und der weiteren Fluidleitung 61 ist noch eine Verbindungsleitung 63 angeschlossen, mittels welcher das Stromregelventilelement 34 fluidisch zwischen dem Stellgliedfluidelement 31 und der regelbaren Fluidfördereinrichtung 33 zwischengeschaltet ist. Genauer gesagt ist das Stromregelventilelement 34 hinsichtlich des Stellgliedfluidelements 31 parallel zu der regelbaren Fluidfördereinrichtung 33 geschaltet. Somit kann mittels des Stromregelventilelements 34 der Strömungswiderstand an dem Stellgliedfluidelement 31 unabhängig von der Förderrichtung 59 bzw. 59A der Fluidfördereinrichtung 33 verändert werden, wodurch eine Beeinflussung des Schwingungsisolationsvermögens des Stellgliedfluidelements 31 erzielt werden kann.

Zwischen der Hydraulikpumpe 35 und dem Hydrauliköltank 41 ist noch eine Leckölleitung 64 vorgesehen.

Zwischen der ersten Fluidleitung 57 und dem Hydrauliköltank 41 ist ebenso eine Nachsaugleitung 65 mit einem Rückschlagventil 66 angeordnet, wie zwischen der weiteren Fluidleitung 61 und dem Hydrauliktank 41 eine weitere Nachsaugleitung 67 mit einem weiteren Rückschlagventil 68 vorgesehen ist. Hierdurch kann im Bedarfsfall durch die Hydraulikpumpe 35 Hydrauliköl 46 direkt aus dem Hydrauliköltank 41 in die Druckstufenkammer 48 oder in die Zugstufenkammer 49 gefördert werden.

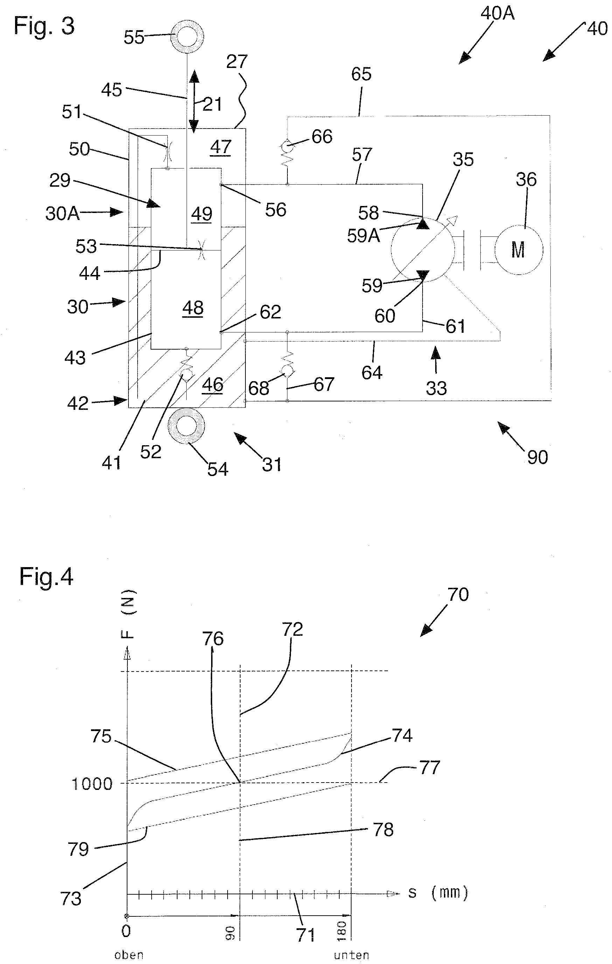

Bei der weiteren Anordnung des in der Figur 3 gezeigten ersten Fluidfördersystems 40 gemäß dem ersten Fluidschaubild 40A fehlt das Stromregelventilelement 34 (siehe insbesondere Figur 2). Ansonsten ist der Aufbau der Anordnung aus der Figur 2 identisch mit dem Aufbau der in der Figur 3 gezeigten weiteren Anordnung. Insofern wird letztere nicht nochmals erläutert, um Wiederholungen zu vermeiden. Die Funktion des nicht vorhandenen Stromregelventilelements 34 wird zumindest teilweise durch die Umkehrung der Förderrichtung 59 bzw. 59A erreicht.

Die in den Fluidschaubildern 39A und 40A gezeigten Anordnungen stellen jeweils eine erste vorteilhafte Dämpfungs- und Höhennivelliereinheit 90 der Erfindung dar. Insofern kann diese hydraulisch wirkende Dämpfungs- und Höhennivelliereinheit 90 nicht nur als eine weitere Funktionsbauteilgruppe der Dämpfungseinrichtung 25 angesehen werden, sondern sie verkörpert zugleich auch die Höhen- bzw. Abstandsnivellierungseinrichtung (hier nicht explizit beziffert) zum Einstellen des Abstandes 32 bezüglich dem oberen Abschlussteil 3 und dem unteren Abschlussteil 4 in Fahrzeughöhenrichtung 21.

Vorteilhaft ist auch, dass über den gesamten zur Verfügung stehenden Federungsweg s linear ansteigende Kraftkennlinien 75 und 79 bereitgestellt werden können, wie auch gemäß dem in der Figur 4 gezeigten Diagramm 70 visualisiert ist.

Bei dem Diagramm 70 ist an der Abszisse 71 der vorhandene Federungsweg s in Millimeter abgetragen, wobei ein angestrebtes mittleres vertikales Höhenniveau 72 bei 90 mm liegt, so dass das obere Abschlussteil 3 im Idealfall sowohl einen vertikal nach unten zur Verfügung stehenden negativen Federungsweg als auch einen vertikal nach oben zur Verfügung stehenden positiven Federungsweg von jeweils 90 mm durchlaufen kann.

An der Ordinate 73 des Diagramms 70 ist die einer Auflast auf das obere Abschlussteil 3 entgegenwirkende Kraft F in Newton abgetragen.

Die mittlere in diesem Diagramm 70 eingetragene Federkennlinie 74 ist die des Federungselements 19, welche durch den Schnittpunkt 76 der durch die Auflast von 1000 N erzeugten Linie 77 und der durch das vertikale Höhenniveau 72 erzeugten weiteren Linie 78 verläuft, und welche am Beginn des Federungswegs s einen logarithmischen Verlauf und am Ende des Federungswegs s einen exponentiellen Verlauf aufweist; dazwischen steigt die mittlere Federkennlinie 74 des Federungselements 19 linear an.

Die oberhalb der mittleren Federkennlinie 74 verlaufende Kraftkennlinie 75 beinhaltet die Wirkung der Aktivierung der Druckstufe 30 des Druckstufen 30 und Zugstufen 30A-gesteuerten Stellgliedfluidelements 31, wobei diese obere Kraftkennlinie 75 vollständig über den gesamten Federungsweg s linear verläuft.

Die obere Kraftkennlinie 75 zeigt somit die oberen Soll-Werte der durch die Dämpfungs- und Höhennivelliereinheit 90 erzeugten Kräfte in Fahrzeughöhenrichtung 21.

Die unterhalb der mittleren Federkennlinie 74 verlaufende untere Kraftkennlinie 79 beschreibt die durch die Dämpfungs- und Höhennivelliereinheit 90 erzeugten Kräfte in Fahrzeughöhenrichtung 21 bezüglich unterer Soll-Werte. Die untere Kraftkennlinie 79 beinhaltet die Wirkung der Aktivierung der Zugstufe 30A des Druckstufen 30 und Zugstufen 30A-gesteuerten Stellgliedfluidelements 31, wobei auch diese untere Kraftkennlinie 79 vollständig über den gesamten Federungsweg s linear verläuft.

Durch das Diagramm 70 ist gut zu erkennen, dass insbesondere das Federungselement 19 als Basis für die Aufnahme einer Grundlast dient, welche als Masse auf die Federung wirkt. Die maximal mögliche Federkraft ist insbesondere durch die Dimension der Dämpfungs- und Höhennivelliereinheit 90 definiert, welche im gezeigten Diagramm 70 in Fahrzeughöhenrichtung 21 200 N beträgt. Bei temporären Niveauabweichungen, welche sich beispielsweise durch Gewichtsverlagerungen des Fahrers bei Bergauf-, Bergab- oder Schrägfahrten ergeben können, kann je nach Abweichungsrichtung und Abweichungsintensität die durch die Dämpfungs- und Höhennivelliereinheit 90 erzeugten Kräfte erhöht oder abgesenkt werden. Bei der vorliegenden Dämpfungs- und Höhennivelliereinheit 90 werden die hierdurch erzeugten Kräfte aktiv ausgenutzt, um äußere in das Federungssystem eingebrachte Einleitungen zu beeinflussen. Die Dämpfungs- und Höhennivelliereinheit 90 kann sowohl mit der Einleitung wirken, dass heißt, eine Einschubkraft bewirkt bzw. eine Stützkraft zum Tragen der Masse wird reduziert, wodurch das obere Abschlussteil 3 gegenüber dem unteren Abschlussteil 4 aktiv abgesenkt wird. Sie kann aber auch gegen die Einleitung wirken, wobei die Stützkraft entsprechend erhöht wird, wodurch das obere Abschlussteil 3 gegenüber dem unteren Abschlussteil 4 aktiv angehoben wird.

Die zur Verfügung stehende Kraft, beispielsweise 200 N, kann über die Dimension der Hydraulikpumpe 35 mit den Parametern Druck (bar) und Fördermenge (cm³/U) definiert werden. Die Dynamik bzw. Regelkraft der Nivellierung ist hauptsächlich abhängig von dem über die Fluidfördereinrichtung 33 in das Stellgliedfluidelement 31 eingebrachte Hydraulikölvolumen, welches von der Zugstufenkammer 49 in die Druckstufenkammer 48, oder umgekehrt, gefördert wird.

Die Art und Intensität der Regelung ist in einem Regelalgorithmus einer entsprechend ausgestalteten Regel- und/oder Steuerungseinrichtung (hier nicht explizit gezeigt) zugrunde gelegt.

Mittels der Steuer- und/oder Regeleinrichtung kann die Dämpfungs- und Höhennivelliereinheit 90 in Abhängigkeit von einer auf das obere Abschlussteil 3 wirkenden Auflast entsprechend eingestellt werden.

Hierzu weist die Steuer- und/oder Regeleinrichtung einerseits einen auf Seite 95 des unteren Abschlussteils 4 angeordneten Beschleunigungsmesssensors 96 zum Ermitteln von auf das untere Abschlussteil 4 wirkende Beschleunigungen und andererseits einen Wegmesssensor 97 zum Erfassen des aktuellen Abstands 32 und/oder einer entsprechenden Abstandsabweichung zwischen dem oberen und der unteren Abschlussteil 3, 4 auf (siehe Figur 1).

Es versteht sich, dass es sich bei dem vorstehend erläuterten Ausführungsbeispielen um nicht einschränkende Ausgestaltungen der Erfindung handelt, deren Reichweite durch die Ansprüche definiert wird.

An dieser Stelle sei somit nochmals explizit darauf hingewiesen, dass der vorstehend beschriebene Fahrzeugsitzunterbau 1 alternativ auch als Fahrzeugkabinenunterbau verwendet werden kann, sofern er entsprechend dimensioniert ist.

### Bezugszeichenliste

- 1: Fahrzeugsitzunterbau
- 2: Federungseinrichtung
- 3: oberes Abschlussteil
- 4: unteres Abschlussteil
- 5: Scherengestell
- 6: erstes Scherenarmpaar
- 7: zweites Scherenarmpaar
- 8: erster Scherenarm vom ersten Scherenarmpaar
- 9: erster Scherenarm vom zweiten Scherenarmpaar
- 10: zweiter Scherenarm vom ersten Scherenarmpaar
- 11: zweiter Scherenarm vom zweiten Scherenarmpaar
- 12: gemeinsame untere Festlagereinrichtung
- 13: gemeinsame obere Loslagereinrichtung
- 14: gemeinsame obere Festlagereinrichtung
- 15: gemeinsame untere Loslagereinrichtung
- 16: Drehgelenke
- 19: Federungselement
- 21: Fahrzeughöhenrichtung
- 25: Dämpfungseinrichtung
- 26: hydraulisches Stoßdämpferelement
- 27: Zylinderteil
- 28: Querstange
- 29: Kolbenteil
- 30: Druckstufe
- 30A: Zugstufe
- 31: Stellgliedfluidelement
- 32: Abstand
- 33: Fluidfördereinrichtung
- 34: Stromregelventilelement
- 35: Hydraulikpumpe
- 36: Elektromotor
- 37: Proportionalstromregelventil
- 38: Fluidleitungssystem
- 39: erstes Fluidfördersystem
- 39: erstes Fluidschaubild
- 40: weiteres Fluidfördersystem
- 40A: weiteres Fluidschaubild
- 41: Hydrauliköltank
- 42: Außengehäuse
- 43: Arbeitszylinder
- 44: Kolbenboden
- 45: Kolbenstange
- 46: Hydrauliköl
- 47: Gasvolumenausgleichsraum
- 48: Druckstufenkammer
- 49: Zugstufenkammer
- 50: Steigrohr
- 51: Druckausgleichsventil
- 52: Bodenventil
- 53: Zug-/Druckstufen-Ventil
- 54: untere Anschlussstelle
- 55: obere Anschlussstelle
- 56: Zugstufenkammeranschluss
- 57: erste Fluidleitung
- 58: ersten Anschluss
- 59: erste Förderrichtung
- 59A: zweite Förderrichtung
- 60: weiterer Anschluss
- 61: weitere Fluidleitung
- 62: Druckstufenkammeranschluss
- 63: Verbindungsleitung
- 64: Leckölleitung
- 65: Nachsaugleitung
- 66: Rückschlagventil
- 67: weitere Nachsaugleitung
- 68: weiteres Rückschlagventil
- 70: Diagramm
- 71: Abszisse
- 72: Höhenniveau
- 73: Ordinate
- 74: mittlere Federkennlinie
- 75: obere Kraftkennlinie
- 76: Schnittpunkt
- 77: erzeugte Linie
- 78: weitere erzeugte Linie
- 79: untere Kraftkennlinie
- 90: Dämpfungs- und Höhennivelliereinheit
- 95: Seite
- 96: Beschleunigungsmesssensor
- 97: Wegmesssensor

## Patentansprüche

1. Fahrzeugsitz oder Fahrzeugkabine mit einer Federungseinrichtung (2) umfassend ein oberes Abschlussteil (3) und ein gegenüber dem oberen Abschlussteil (3) auslenkbares unteres Abschlussteil (4), welche mittels eines Federungselements (19) federnd miteinander verbunden sind, und mit einer Dämpfungseinrichtung (25, 26) zum Dämpfen von an wenigstens einem der beiden Abschlussteilen (3,4) wirkenden Schwingungen,
**dadurch gekennzeichnet, dass**
die Dämpfungseinrichtung (25, 26) und eine Abstandsnivellierungseinrichtung zum Einstellen eines Abstandes (32) zwischen dem oberen Abschlussteil (3) und dem unteren Abschlussteil (4) ein gemeinsames Druck- und Zugstufen (30, 30A) gesteuertes Stellgliedfluidelement (31) aufweisen, wobei das Stellgliedfluidelement (31) mit einer regelbaren Fluidfördereinrichtung (33) wirkverbunden ist, welche in ihrer Fluidförderrichtung umkehrbar ist und welche einerseits mit der Druckstufenkammer (48) und andererseits mit der Zugstufenkammer (49) des Stellgliedfluidelements (31) derart fluidisch verbunden ist, dass ein Fluid (46) in Abhängigkeit von der Förderrichtung (59, 59A) der Fluidfördereinrichtung (33) entweder aus der Druckstufenkammer (48) des Stellgliedfluidelements (31) in die Zugstufenkammer (49) oder aus der Zugstufenkammer (49) des Stellgliedfluidelements (31) in die Druckstufenkammer (48) förderbar ist.

2. Fahrzeugsitz oder Fahrzeugkabine nach Anspruch 1,
**dadurch gekennzeichnet, dass**
die regelbare Fluidfördereinrichtung (33) einerseits mit der Druckstufenkammer (48) und andererseits mit der Zugstufenkammer (49) des Stellgliedfluidelements (31) derart fluidisch verschaltet ist, dass mittels einer Leistungsregulierung der regelbaren Fluidfördereinrichtung (33) unterschiedliche Höhennivellierungen hinsichtlich des oberen Abschlussteils (3) vorgenommen werden können.

3. Fahrzeugsitz oder Fahrzeugkabine nach Anspruch 1 oder 2,
**dadurch gekennzeichnet, dass**
die regelbare Fluidfördereinrichtung (33) einerseits mit der Druckstufenkammer (48) und andererseits mit der Zugstufenkammer (49) des Stellgliedfluidelement (31) derart fluidisch verbunden ist, dass das Fluid (46) in Abhängigkeit von der Förderrichtung (59, 59A) der Fluidfördereinrichtung (33) aus einem anderen Fluidreservoir (41) eines Fluidfördersystems (40A) entweder in die Druckstufenkammer (48) oder in die Zugstufenkammer (49) förderbar ist.

4. Fahrzeugsitz oder Fahrzeugkabine nach einem der Ansprüche 1 bis 3,
**dadurch gekennzeichnet, dass**
das Stellgliedfluidelement (31) mit einem Stromregelventilelement (34) wirkverbunden ist, welches mit dem Stellgliedfluidelement (31) und einer regelbaren Fluidfördereinrichtung (33) derart fluidisch verschaltet ist, dass die Leistung der Druckstufe (30) oder der Zugstufe (30A) mittels dieses Stromregelventilelement (34) zusätzlich modulierbar ist.

5. Fahrzeugsitz oder Fahrzeugkabine nach Anspruch 4,
**dadurch gekennzeichnet, dass**
das Stromregelventilelement (34) mit dem Stellgliedfluidelement (31) und der regelbaren Fluidfördereinrichtung (33) derart fluidisch verschaltet ist, dass die Leistung der Druckstufe (30) und der Zugstufe (30A) unter Umgehung einer Leistungsbeeinflussung der Fluidfördereinrichtung (33) mittels dieses Stromregelventilelements (34) zusätzlich modulierbar ist.

6. Fahrzeugsitz oder Fahrzeugkabine nach Anspruch 4 oder 5,
**dadurch gekennzeichnet, dass**
das Stromregelventilelement (34) mit dem Stellgliedfluidelement (31) und der regelbaren Fluidfördereinrichtung (33) derart fluidisch verschaltet ist, dass mittels des Stromregelventilelements (34) eine Schwingungsisolierung bezüglich eines der Abschlussteile (3, 4) vorgenommen werden kann.

7. Fahrzeugsitz oder Fahrzeugkabine nach einem der Ansprüche 2 bis 6,
**dadurch gekennzeichnet, dass**
ein Niederdruckanschluss (58) der regelbaren Fluidfördereinrichtung (33) mittels einer Niederdruckleitung (57) fluidisch an der Zugstufenkammer (49) und ein Hochdruckanschluss (60) der regelbaren Fluidfördereinrichtung (33) mittels einer Hochdruckleitung (61) fluidisch an der Druckstufenkammer (48), oder bei umgekehrter Förderrichtung (59A) umgekehrt, angeschlossen ist, wobei die Niederdruckleitung (58) und die Hochdruckleitung (61) mittels eines elektrisch betätigbaren Proportionalstromregelventils (37) fluidisch miteinander verbunden sind.

8. Fahrzeugsitz oder Fahrzeugkabine nach einem der Ansprüche 1 bis 7,
**gekennzeichnet durch**
eine Steuer- und/oder Regeleinrichtung zum Einstellen einer regelbaren Fluidfördereinrichtung (33) und/oder eines Stromregelventilelements (34) in Abhängigkeit von einer auf das obere Abschlussteil (3) wirkenden Auflast.

9. Fahrzeugsitz oder Fahrzeugkabine nach Anspruch 8,
**dadurch gekennzeichnet, dass**
die Steuer- und/oder Regeleinrichtung einen auf Seite (95) des unteren Abschlussteils (4) angeordneten Beschleunigungsmesssensor (96) zum Ermitteln von auf das untere Abschlussteil (4) wirkende Beschleunigungen umfasst.

10. Fahrzeugsitz oder Fahrzeugkabine nach Anspruch 8 oder 9,
**dadurch gekennzeichnet, dass**
die Steuer- und/oder Regeleinrichtung einen Wegmesssensor (97) zum Erfassen eines Abstands (32) und/oder einer Abstandsabweichung zwischen dem oberen und dem unteren Abschlussteil (3, 4) umfasst.

11. Nutzkraftfahrzeug mit einem Fahrzeugsitz und mit einer Fahrzeugkabine,
**gekennzeichnet durch**
einen Fahrzeugsitz und/oder eine Fahrzeugkabine nach einem der vorhergehenden Ansprüche.

## Claims

1. Vehicle seat or vehicle cab with a suspension system (2) comprising an upper end part (3) and a lower end part (4) that is deflectable relative to the upper end part (3), which parts are resiliently interconnected by means of a suspension element (19), and comprising a damping device (25, 26) for damping vibrations acting on at least one of the two end parts (3, 4),
**characterised in that**
the damping device (25, 26) and a distance-adjusting device for adjusting a distance (32) between the upper end part (3) and the lower end part (4) comprise a common actuator fluid element (31) controlled by pressure stages and tension stages (30, 30A), the actuator fluid element (31) being operatively connected to a controllable fluid-conveying device (33), which is reversible in terms of its fluid-conveying direction and which is in fluid connection with both the pressure-stage chamber (48) and the tension-stage chamber (49) of the actuator fluid element (31) such that a fluid (46) can be conveyed out of either the pressure-stage chamber (48) of the actuator fluid element (31) into the tension-stage chamber (49) or out of the tension-stage chamber (49) of the actuator fluid element (31) into the pressure-stage chamber (48) depending on the conveying direction (59, 59A) of the fluid-conveying device (33).

2. Vehicle seat or vehicle cab according to claim 1,
**characterised in that**
the controllable fluid-conveying device (33) is in fluid connection with both the pressure-stage chamber (48) and the tension-stage chamber (49) of the actuator fluid element (31) such that various height adjustments of the upper end part (3) can be carried out by controlling the power of the controllable fluid-conveying device (33).

3. Vehicle seat or vehicle cab according to either claim 1 or claim 2,
**characterised in that**
the controllable fluid-conveying device (33) is in fluid connection with both the pressure-stage chamber (48) and the tension-stage chamber (49) of the actuator fluid element (31) such that the fluid (46) can be conveyed out of another fluid reservoir (41) of a fluid-conveying system (40A) into either the pressure-stage chamber (48) or the tension-stage chamber (49) depending on the conveying direction (59, 59A) of the fluid-conveying device (33).

4. Vehicle seat or vehicle cab according to any of claims 1 to 3,
**characterised in that**
the actuator fluid element (31) is operatively connected to a flow-control valve element (34), which is in fluid connection with the actuator fluid element (31) and a controllable fluid-conveying device (33) such that the power of the pressure stage (30) or the tension stage (30A) can be additionally modulated by means of said flow-control valve element (34).

5. Vehicle seat or vehicle cab according to claim 4,
**characterised in that**
the flow-control valve element (34) is in fluid connection with the actuator fluid element (31) and the controllable fluid-conveying device (33) such that the power of the pressure stage (30) and the tension stage (30A) can be additionally modulated by means of this flow-control valve element (34) while not affecting the power of the fluid-conveying device (33).

6. Vehicle seat or vehicle cab according to either claim 4 or claim 5,
**characterised in that**
the flow-control valve element (34) is in fluid connection with the actuator fluid element (31) and the controllable fluid-conveying device (33) such that vibrations of one of the end parts (3, 4) can be isolated by means of the flow-control valve element (34).

7. Vehicle seat or vehicle cab according to any of claims 2 to 6,
**characterised in that**
a low-pressure connection (58) of the controllable fluid-conveying device (33) is in fluid connection with the tension-stage chamber (49) by means of a low-pressure line (57) and a high-pressure connection (60) of the controllable fluid-conveying device (33) is in fluid connection with the pressure-stage chamber (48) by means of a high-pressure line (61), or vice versa in the reverse conveying direction (59A), the low-pressure line (58) and the high-pressure line (61) being fluidically interconnected by means of an electrically operable proportional flow control valve (37).

8. Vehicle seat or vehicle cab according to any of claims 1 to 7,
**characterised by**
an open-loop and/or closed-loop control device for adjusting a controllable fluid-conveying device (33) and/or a flow-control valve element (34) depending on a load acting on the upper end part (3).

9. Vehicle seat or vehicle cab according to claim 8,
**characterised in that**
the open-loop and/or closed-loop control device comprises an acceleration-measuring sensor (96) which is arranged on the face (95) of the lower end part (4) and is intended for detecting accelerations acting on the lower end part (4).

10. Vehicle seat or vehicle cab according to either claim 8 or claim 9,
**characterised in that**
the open-loop and/or closed-loop control device comprises a travel-measuring sensor (97) for detecting a distance (32) and/or a distance variation between the upper and the lower end part (3, 4).

11. Utility motor vehicle comprising a vehicle seat and a vehicle cab,
**characterised by**
a vehicle seat and/or a vehicle cab according to any of the preceding claims.

## Revendications

1. Siège de véhicule ou cabine de véhicule doté(e) d'un dispositif de suspension (2) comportant une partie d'extrémité supérieure (3) et une partie d'extrémité inférieure (4) apte à être déviée par rapport à la partie d'extrémité supérieure (3), qui sont reliées l'une à l'autre de manière élastique au moyen d'un élément de suspension (19), et d'un dispositif d'amortissement (25, 26) pour l'amortissement de vibrations agissant sur au moins l'une des deux parties d'extrémité (3, 4),
caractérisé(e) par le fait que
le dispositif d'amortissement (25, 26) et un dispositif d'ajustement d'écart pour ajuster un écart (32) entre la partie d'extrémité supérieure (3) et la partie d'extrémité inférieure (4) présentent un élément à fluide actionneur (31) commun commandé par des étages de pression et traction (30, 30A), l'élément à fluide actionneur (31) étant relié fonctionnellement à un dispositif de transport de fluide régulable (33), lequel est réversible dans sa direction de transport de fluide et lequel est relié fluidiquement d'une part, avec la chambre à étages de pression (48) et, d'autre part, avec la chambre à étages de traction (49) de l'élément à fluide actionneur (31) de telle sorte qu'un fluide (46) est apte à être transporté soit hors de la chambre à étages de pression (48) de l'élément à fluide actionneur (31) dans la chambre à étages de traction (49) soit hors de la chambre à étages de traction (49) de l'élément fluide actionneur (31) dans la chambre à étages de pression (48) en fonction de la direction de transport (59, 59A) du dispositif de transport de fluide (33).

2. Siège de véhicule ou cabine de véhicule selon la revendication 1,
caractérisé(e) par le fait que
le dispositif de transport de fluide régulable (33) est en liaison fluidique, d'une part, avec la chambre à étages de pression (48) et, d'autre part, avec la chambre à étages de traction (49) de l'élément à fluide actionneur (31) de telle sorte qu'au moyen d'une régulation de la puissance du dispositif de transport de fluide régulable (33), différents ajustements en hauteur en ce qui concerne la partie d'extrémité supérieure (3) peuvent être effectués.

3. Siège de véhicule ou cabine de véhicule selon l'une des revendications 1 ou 2,
caractérisé(e) par le fait que
le dispositif de transport de fluide régulable (33) est relié fluidiquement, d'une part, avec la chambre à étages de pression (48) et, d'autre part, avec la chambre à étages de traction (49) de l'élément à fluide actionneur (31) de telle sorte que le fluide (46) est apte à être transporté hors d'un autre réservoir de fluide (41) d'un système de transport de fluide (40A) soit dans la chambre à étages de pression (48) soit dans la chambre à étages de traction (49) en fonction de la direction de transport (59, 59A) du dispositif de transport de fluide (33).

4. Siège de véhicule ou cabine de véhicule selon l'une des revendications 1 à 3,
caractérisé(e) par le fait que
l'élément à fluide actionneur (31) est relié fonctionnellement avec un élément de soupape de régulation de débit (34), lequel est en liaison fluidique avec l'élément à fluide actionneur (31) et un dispositif de transport de fluide régulable (33) de telle sorte que la puissance de l'étage de pression (30) ou de l'étage de tension (30A) est modulable de façon supplémentaire au moyen de cet élément de soupape de régulation de débit (34).

5. Siège de véhicule ou cabine de véhicule selon la revendication 4,
caractérisé(e) par le fait que
l'élément de soupape de régulation de débit (34) est en liaison fluidique avec l'élément à fluide actionneur (31) et le dispositif de transport de fluide régulable (33) de telle sorte que la puissance de l'étage de pression (30) et de l'étage de tension (30A) est modulable de façon supplémentaire au moyen de cet élément de soupape de régulation de débit (34) tout en n'affectant pas la puissance du dispositif de transport de fluide (33).

6. Siège de véhicule ou cabine de véhicule selon l'une des revendications 4 ou 5,
caractérisé(e) par le fait que
l'élément de soupape de régulation de débit (34) est en liaison fluidique avec l'élément à fluide actionneur (31) et le dispositif de transport de fluide régulable (33) de telle sorte qu'au moyen de l'élément de soupape de régulation de débit (34), une isolation de vibrations peut être réalisée en ce qui concerne l'une des parties d'extrémité (3, 4).

7. Siège de véhicule ou cabine de véhicule selon l'une des revendications 2 à 6,
caractérisé(e) par le fait que
un raccord basse pression (58) du dispositif de transport de fluide régulable (33) est raccordé fluidiquement à la chambre à étages de traction (49) au moyen d'une conduite basse pression (57) et un raccord haute pression (60) du dispositif de transport de fluide régulable (33) est raccordé fluidiquement à la chambre à étages de pression (48) au moyen d'une conduite haute pression (61), ou inversement dans le cas d'une direction de transport inversée (59A), la conduite basse pression (58) et la conduite haute pression (61) étant reliées l'une à l'autre fluidiquement au moyen d'une soupape de régulation de débit proportionnelle (37) actionnable électriquement.

8. Siège de véhicule ou cabine de véhicule selon l'une des revendications 1 à 7,
caractérisé(e) par
un dispositif de commande et/ou de régulation pour le réglage d'un dispositif de transport de fluide régulable (33) et/ou d'un élément de soupape de régulation de débit (34) en fonction d'une charge agissant sur la partie d'extrémité supérieure (3).

9. Siège de véhicule ou cabine de véhicule selon la revendication 8,
caractérisé(e) par le fait que
le dispositif de commande et/ou de régulation comporte un capteur de mesure d'accélérations (96) disposé du côté (95) de la partie d'extrémité inférieure (4) pour la détection d'accélérations agissant sur la partie d'extrémité inférieure (4).

10. Siège de véhicule ou cabine de véhicule selon l'une des revendications 8 ou 9,
caractérisé(e) par le fait que
le dispositif de commande et/ou de régulation comporte un capteur de mesure de déplacement (97) pour la détection d'une distance (32) et/ou d'une variation de distance entre les parties d'extrémité (3, 4) supérieure et inférieure.

11. Véhicule utilitaire comportant un siège de véhicule et une cabine de véhicule,
**caractérisé par**
un siège de véhicule et/ou une cabine de véhicule selon l'une des revendications précédentes.
